# EUROPEAN PATENT SPECIFICATION

(11) **EP 3 931 479 B1**
(45) Date of publication and mention of the grant of the patent: **05.04.2023**
(21) Application number: 20710278.1
(22) Date of filing: 17.02.2020
(51) Int. Cl.: F16L 37/084, F16L 37/12

(54) **QUICK COUPLING**
SCHNELLKOPPLUNG
RACCORD RAPIDE

(30) Priority: 27.02.2019 IT 201900002821
(43) Date of publication of application: 05.01.2022
(73) Proprietor: Polo S.R.L., 23841 Annone di Brianza (LC) (IT)
(72) Inventor: POZZI, Marco, 23900 Lecco (IT); LOCATELLI, Silvia, 23900 Lecco (IT)
(74) Representative: PGA S.p.A.
(86) International application number: PCT/IB2020/051299
(87) International publication number: WO 2020/174314

(56) References cited:
- EP-A1- 2 280 208
- WO-A1-2017/006225

## Description

### Field of the invention

The present invention relates to a quick coupling. In particular, the present invention relates to a device for the quick connection of a duct of a circuit crossed by a fluid to a male or female threaded or shaped terminal. The invention falls within the field of quick couplings able to quickly and safely carry out the connection and disconnection operations of two different ducts crossed by fluids, avoiding the onerous manual tightening operations that would require the use of wrenches or other tools and ensuring both the mechanical seal and the hermetic seal. The use of these quick couplings is necessary, for example but not exclusively, when functional tests of products that require connection to pneumatic/oil-dynamic/hydraulic circuits (for example: boilers, radiators, motors, pumps, hydraulic/pneumatic cylinders, valves, etc.) are carried out. In particular, the device object of the present invention is suitable for very wide uses, in which operating pressure and flow rate can vary from negative values (presence of vacuum) to very high values.

### Prior art

Quick couplings are known that can be operated manually, in "push-pull" mode, for which the connection step takes place by holding an external ring nut of the coupling and pushing the coupling itself against the terminal to which it should be connected until the latter is hooked and held mechanically and the disconnection step takes place by still acting on the aforementioned external ring nut.

In particular, document EP3320250 is known in the name of the same Applicant which illustrates a quick coupling comprising: a substantially tubular main body and internally delimiting a passage duct for a fluid, a plurality of jaws arranged around a main axis of the passage duct and operatively engaged with the main body at a first end, wherein each of the jaws is movable radially with respect to the main body between a first position of release from the terminal and a second position of coupling to the terminal. Activation devices are operatively engaged with the jaws to determine the passage between the first position and the second position. A guide ring coaxial with the main body has radial guides engaged with the plurality of jaws for guiding them radially during the movement between the first and second position. An obturator is movable axially with respect to the main body between an advanced position towards engagement portions of the jaws, in which radially and at least partially overcomes the engagement portions to hold them in the first release position from the terminal, and a retracted position, in which it releases the engagement portions and allows the radial movement of the jaws. An embodiment of EP3320250 configured for coupling with female terminals comprises a ring nut radially external to the main body and axially movable on the main body and a body radially internal with respect to the main body and integrally connected to the ring nut. An operative portion of the radially internal body is engaged or engageable with the jaws. The auxiliary body is axially movable with respect to the main body between a retracted position with respect to the engagement portions of the jaws corresponding to the release position of the jaws, and an advanced position, in which it radially pushes the jaws into the second position coupled to the terminal. The quick coupling of EP3320250 also includes an engagement/detachment slider coaxial to the main body and movable axially with respect to the main body and with respect to the obturator and latching/releasing elements movable in through holes formed in the main body, wherein said latching/releasing elements are engaged/engageable with the engagement/detachment slider and with the radially internal body. During the coupling of the quick coupling to the terminal, the obturator rests against the terminal while the ring nut advances towards the terminal. The obturator stops and pushes against the engagement/detachment slider which releases the latching/releasing elements which in turn release the radially internal body of the auxiliary body which moves to the advanced position, in which it radially pushes the jaws into the second position coupled to the terminal.

The Applicant has observed that the known quick couplings may be improved in various aspects, in particular with reference to the dimensions of these couplings and to the forces that the internal pressure exerts on their parts.

In particular, the Applicant has observed that in the quick coupling of EP3320250 described above, the structure defined by the engagement/detachment slider, the obturator and the guide ring of the jaws is cumbersome since the slider and the obturator are positioned radially outside of the guide ring so that the obturator can interact with the slider. This determines, for the same dimensions of the terminal, considerable outer diameters with consequent difficulty of use/installation of the couplings.

The Applicant has further observed that the structure of EP3320250 also determines significant coupling diameters between the movable elements of the coupling, for example at O-rings, and such that the force exerted by the fluid under pressure on these movable elements is high and therefore the maximum pressure acceptable by the coupling itself is reduced.

### Object of the invention

In this context, the Applicant has set itself the objective of proposing a qualitatively superior and more compact quick coupling than those of the prior art.

In particular, the Applicant has set itself the aim of proposing a quick coupling which, for the same size of the terminal to be coupled to, has contained overall dimensions, in particular radial, and in any case smaller than those of the prior art. The Applicant has also set itself the aim of proposing a more robust quick coupling, i.e. capable of operating correctly even with high pressures of the fluid passing through it.

The Applicant has also set itself the aim of proposing a quick coupling which can be easily installed and maneuvered even in confined spaces.

### Summary of the invention

The Applicant has found that these objects and tasks can be achieved by implementing a quick coupling according to the present invention, of the type claimed in the appended claims and/or described in the following aspects.

In particular, the quick coupling according to the invention comprises a plurality of jaws which open and close radially without bending and/or inclining but which are instead guided in their radial movement by means of a guide ring provided with radial guides and at least one motion transmission rod interposed between the engagement/detachment slider and the obturator to transmit the axial movement of the obturator to the engagement/detachment slider.

According to an independent aspect, the present invention relates to a quick coupling for threaded or shaped terminals, comprising:
a substantially tubular main body internally delimiting a passage duct for a fluid,
wherein said main body has a first end configured to be placed in fluid connection with a terminal and a second end opposite the first end and configured to connect with a circuit;
a plurality of jaws arranged around a main axis of the passage duct, wherein the jaws and operatively coupled to the main body at the first end, wherein each of said jaws is movable radially with respect to the main body between a first release position from a terminal and a second position coupled to the terminal;
a guide ring coaxial with the main body and having radial guides engaged with the plurality of jaws for guiding them radially during the movement between the first and second position;
an obturator substantially tubular and coaxial with the main body, wherein the obturator is movable axially with respect to the main body between an advanced position towards engagement portions of the jaws, in which it radially and at least partially overcomes the engagement portions of the jaws to hold them in the first release position from the terminal, and a retracted position, in which it releases the engagement portions and allows the radial movement of the jaws;
an auxiliary body sliding axially with respect to the main body, wherein the auxiliary body comprises a ring nut radially external to the main body and movable axially on the main body and a radially internal body with respect to the main body and integrally connected to the ring nut, wherein an operative portion of the radially inner body is engaged or engageable with the jaws; wherein the auxiliary body is movable axially with respect to the main body between a rearward position with respect to the engagement portions of the jaws corresponding to the release position of the jaws, and an advanced position, in which radially pushes the jaws into the second coupled position to the terminal;
an engagement/detachment slider coaxial with the main body and movable axially with respect to the main body and with respect to the obturator;
latching/releasing elements movable in through holes formed in the main body, wherein said latching/releasing elements are engaged/engageable with the engagement/detachment slider and with the radially internal body;
characterized in that it comprises at least one motion transmission rod (or in any case an elongated element) axially interposed between the engagement/detachment slider and the obturator to transmit an axial movement of the obturator to the engagement/detachment slider.

The Applicant has verified that the radial guides of the guide ring in which the jaws are engaged allow obtaining a precise and fluid radial translation of the jaws during the movement between the first and second position while the circumferential position of a jaw with respect to the other remains unchanged. These features allow obtaining a stable and precise connection of the terminal. Furthermore, the Applicant has verified that the adoption of the transmission rod or rods allows arranging the engagement/detachment slider, the obturator and the guide ring differently, in order to reduce the radial dimensions of this assembly while maintaining the functionality thereof.

The Applicant has also verified that the reduction of these axial dimensions also allows reducing, with the same pressure of the fluid, the forces exerted by the same fluid on the movable parts of the coupling ensuring greater safety and/or allowing the use of the coupling with higher maximum pressures.

Further aspects of the invention are listed hereinafter.

In one aspect, the quick coupling is of the male type and the jaws in the first position are radially closer to the main axis than the second position.

In one aspect, the jaws of said plurality of jaws, when in the first position, are circumferentially close to each other and, preferably, when in the second position, they are circumferentially spaced from each other.

In one aspect, said at least one rod comprises a plurality of rods arranged around the main axis, preferably at least two, more preferably three or four.

In one aspect, the transmission rods of said plurality are angularly spaced apart from each other.

In one aspect, said at least one transmission rod, in the first release position, is free to move axially between the engagement/detachment slider and the obturator. In one aspect, said at least one transmission rod, in the second coupling position, is axially locked between the engagement/detachment slider and the obturator.

In one aspect, said at least one transmission rod is parallel to the main axis.

In one aspect, the guide ring has at least one axial passage for said at least one transmission rod, preferably a plurality of axial passages, each for a respective transmission rod.

In one aspect, said at least one axial passage is a hole.

In one aspect, said at least one axial passage is a slot made on a peripheral edge of the guide ring.

In one aspect, the guide ring rests axially against the first end of the main body.

In one aspect, the guide ring surrounds the radially internal body.

In one aspect, an auxiliary guide ring faces the guide ring, wherein a guide portion of each jaw is axially locked between the guide ring and the auxiliary guide ring.

In one aspect, the auxiliary guide ring has at least one auxiliary axial passage for said at least one transmission rod, preferably a plurality of auxiliary axial passages, each for a respective transmission rod.

In one aspect, said at least one auxiliary axial passage is a hole.

In one aspect, said at least one auxiliary axial passage is a slot made on a peripheral edge of the auxiliary guide ring.

In one aspect, the auxiliary guide ring surrounds the jaws which in turn surround the radially internal body.

In one aspect, the auxiliary guide ring comprises a radially outer portion with a greater axial extent and a radially inner portion with a smaller axial extent.

In one aspect, the radially outer portion rests against the guide ring and the radially inner portion remains spaced from the guide ring to delimit a seat for the guide portion of each jaw.

In one aspect, each claw comprises a portion for engaging the terminal and a guide portion configured to slidably couple with one of the radial guides.

In one aspect, each jaw has an axially elongated shape, wherein a first axial end of the jaw has the engagement portion and a second axial end of the jaw, opposite the first, has the guide portion.

In one aspect, the radial guides are equal in number to the jaws. Preferably, the radial guides are angularly equally spaced.

In one aspect, each radial guide is a radial relief engaged in a radial groove of the respective jaw or it is a radial groove engaged with a radial relief of the respective jaw.

In one aspect, said at least one axial passage is placed between two radial guides. In one aspect, the radially internal body of the auxiliary body is axially movable with respect to the main body between a retracted position with respect to the engagement portions of the jaws corresponding to the release position of the jaws, and an advanced position, in which it radially pushes the jaws into the second position coupled to the terminal.

The joint action of the auxiliary body and the obturator causes the radial movement of the jaws both in opening and in closing while they are guided by the guide ring.

In one aspect, the operative portion of the radially internal body comprises a terminal end of said radially internal body configured to act against an inclined surface of a radially internal relief of the jaws.

In one aspect, the obturator has a head end intended to come into contact with the terminal. Preferably, the obturator comprises a sealing gasket placed on the head end to ensure the hermetic seal against the terminal.

In one aspect, the slider and the latching/releasing elements define latching/releasing devices operatively active on the auxiliary body and on the obturator. The latching/releasing devices are configured to latch/release the axial movements of the obturator and the auxiliary body with respect to the main body by moving the ring nut.

In one aspect, said latching/releasing elements are latching/releasing balls.

The function of the slider is to allow the connection of the coupling only after the jaws have completely penetrated the terminal to be connected, ensuring the best grip conditions on the terminal and ensuring the maximum mechanical seal condition.

Preferably, said at least one latching/releasing element is movable between a first axial locking position of the auxiliary body and of release of the slider and a second axial locking position of the slider and of release of the auxiliary body.

In one aspect, the engagement/detachment slider is radially external to the main body and axially aligned with the obturator.

In one aspect, the slider has a radially internal annular groove for engagement with the latching/releasing elements.

In one aspect, the radially internal body has an annular edge engageable against the latching/releasing elements on a radially external surface thereof.

In one aspect, the quick coupling comprises a first spring axially interposed between the main body and the auxiliary body and configured to push said auxiliary body towards the engagement portions of the jaws. Preferably, the quick coupling comprises a second spring axially interposed between the main body and the obturator, preferably between the auxiliary ring and the obturator, and configured to push said obturator towards the engagement portions of the jaws. Preferably, the quick coupling comprises a third spring axially interposed between the main body and the engagement/detachment slider and configured to push said engagement/detachment slider towards the first end of the main body.

In one aspect, the auxiliary body is movable between a first configuration corresponding to the first position of detachment from the terminal and a second configuration corresponding to the second position of engagement to the terminal. In the first configuration, the auxiliary body is in a retracted position with respect to the engagement portions of the jaws. In the second configuration, the auxiliary body is in an advanced position towards the engagement portions of the jaws.

In one aspect, a radially external body is mounted around a portion of the main body and surrounds the first end of the main body, the engagement/detachment slider, the guide ring, the auxiliary guide ring, said at least one rod, at least part of the obturator and at least part of the jaws.

In one aspect, the ring nut, in the second engagement position, rests axially against the radially external body.

In one aspect, the main body has at least one through slot and in which the ring nut is connected to the radially internal body by means of at least one pin integral with the ring nut and to the radially internal body passing through said through slot. In one aspect, said through slot is elongated in an axial direction.

In one aspect, said through slot or at least one of the through slots has an L-shape.

In one aspect, said at least one pin or at least one of said pins protrudes from the L-shaped through slot to define a maneuvering lug.

In one aspect, in the second engagement position, the pin and/or the maneuvering lug is/are located in a section of the L-shaped slot orthogonal to the main axis to lock the coupling in the second engagement position.

In one aspect, the coupling further comprises an auxiliary maneuvering lug integral with the main body and radially protruding from said main body.

The detachment system devised through the actuation of the movable maneuvering lug and the auxiliary maneuvering lug allows the operator to perform the detachment maneuver without requiring operating spaces around the quick coupling (unlike the actuation of the detachment by gripping the outer ring of the previous models).

This fact is of fundamental importance, as the compactness of the new dimensions associated with the operation of the coupling allows following easy connections but above all easy disconnections even if the quick couplings were connected in a stack at such close distance to touch each other.

In one aspect, a first sealing gasket and a second sealing gasket are radially interposed between the radially inner body and the main body and are axially placed respectively upstream and downstream of said at least one through slot.

### Brief description of the drawings

Further features and advantages will become apparent from the detailed description of two preferred, but not exclusive, embodiments of a quick coupling according to the present invention.

Such description is given hereinafter with reference to the accompanying drawings, provided only for illustrative and, therefore, non-limiting purposes, in which:
- figure 1 shows a quick coupling according to the present invention associated with a female terminal;
- figure 2 is a front view of the quick coupling of figure 1;
- figure 3A (top) shows a half-section according to a radial plane and according to an operative configuration of the quick coupling of figures 1 and 2;
- figure 3B (bottom) shows a half-section according to a radial plane and according to a different operating configuration of the quick coupling of figure 3A;
- figure 3C is an enlargement of figure 3A;
- figure 3D is an enlargement of figure 3B;
- figure 4 and figure 5 show respective views of an element of the quick coupling of the previous figures;
- figures 6 and figure 7 show respective views of a different element of the quick coupling according to figures 1-3B.

### Detailed description of preferred embodiments of the invention

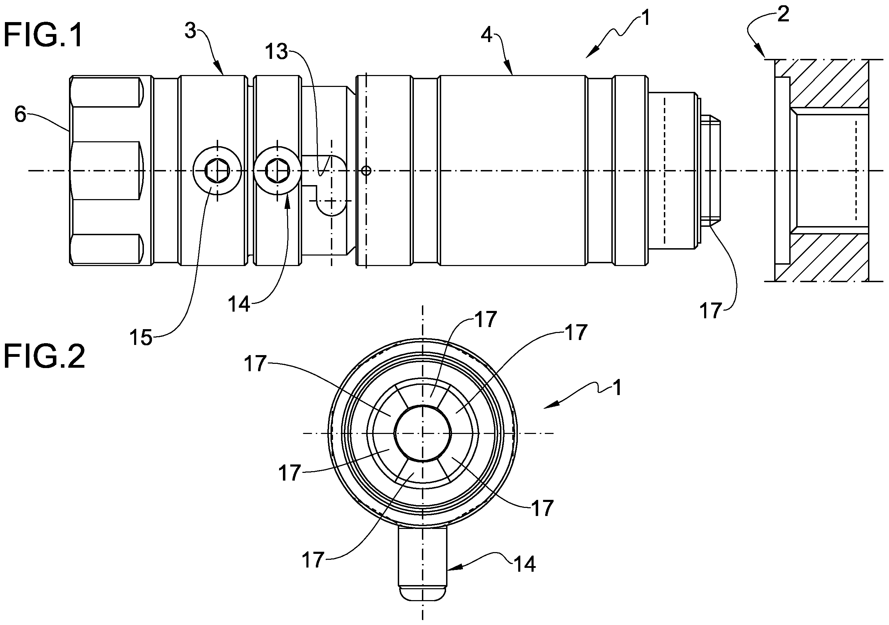

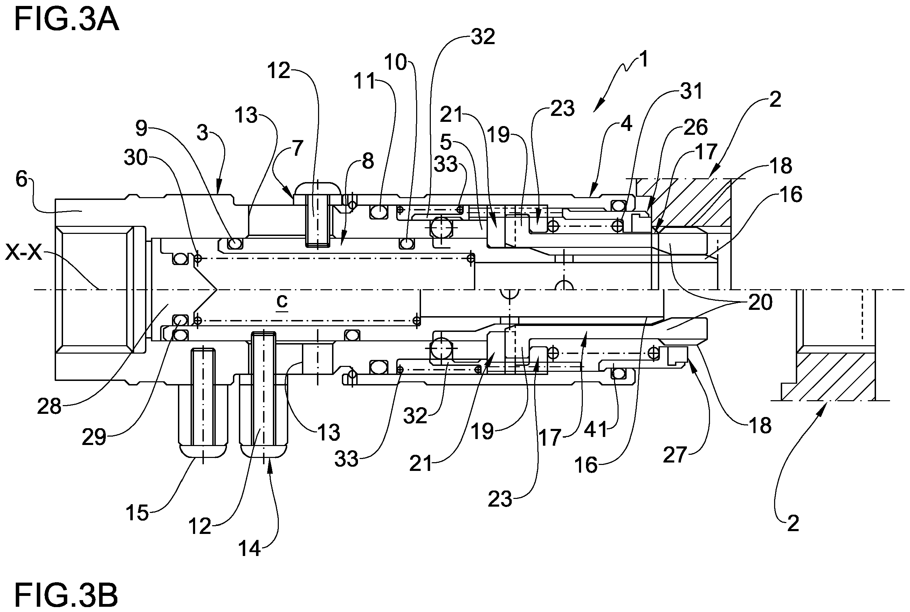

With reference to the accompanying figures, reference numeral 1 generally indicates a quick coupling for threaded or shaped terminals. The figures show in particular a male quick coupling associated with a female threaded terminal 2. Figure 1 is an external view of the quick coupling 1. Figure 2 shows a front view of the quick coupling. Figure 3B shows the quick coupling 1 in a configuration in which the terminal 2 is separated and released from the quick coupling 1. Figure 3A shows the quick coupling 1 in a configuration in which the terminal 2 is attached to the quick coupling 1.

The quick coupling 1 comprises a substantially tubular main body 3 which develops along a main axis "X-X" and a radially external body 4 mounted around a portion of the main body 3. The main body 3 internally delimits, together with other elements described below, a passage duct C for a fluid. The main body 3 has a first end 5 configured to be placed in fluid communication with the terminal 2 and a second end 6 opposite the first end and configured to connect with a circuit, not shown. The first end 5 remains located inside the radially external body 4 which therefore extends beyond said first end 5.

An auxiliary body slides axially with respect to the main body 3 and with respect to the radially external body 4. The auxiliary body comprises a ring nut 7 radially external to the main body 3 and axially movable on the main body 3 and a radially internal body 8 with respect to the main body 3 and integrally connected to the ring nut 7. The ring nut 7 has a reduced axial width, i.e. it has the shape of a ring. The radially internal body 8 slides inside the main body 3 and is coupled to said main body 3 by means of a first sealing gasket 9 and a second sealing gasket (O-ring) 10 arranged in seats on a radially external surface of the radially internal body 8. A sealing gasket 11 is also placed in a seat on a radially external surface of the main body 3 and lies in contact with the radially external body 4. The radially internal body 8 is positioned inside the main body 3 and has a passage which, together with the main body 3, defines the passage duct C of the fluid.

A pin 12 is integrally connected to the ring nut 7 and to the radially internal body 8 and passes through a through slot 13 which extends along the main axis "X-X" and is obtained in the main body 3 to constrain in the axial movement the ring nut 7 to the radially internal body 8. A further pin 12 connects the ring nut 7 to the main body 3 and protrudes from the respective through slot 13 in order to be able to be maneuvered, or to define a maneuvering lug 14. The slots 13 of the pin 12 and of the maneuvering lug 14 have an L-shape with an elongated section along the main axis "X-X" and a section orthogonal to said main axis "X-X" (figure 1). The coupling 1 further comprises an auxiliary maneuvering lug 15 integral with the main body 3 and radially protruding from said main body 3. The first sealing gasket 9 and the second sealing gasket 10 are always arranged axially and respectively upstream and downstream of the through slot 13.

The radially internal body 8 has its own terminal end 16 which protrudes axially beyond the radially external body 4.

Jaws 17 are arranged around the main axis "X-X" of the passage duct and at the first end 5. The quick coupling 1 illustrated comprises six jaws 17. Each jaw 17 comprises an engagement portion 18 with the terminal 2 and a guide portion 19 opposite the engagement portion 18. The engagement portion 18 of the jaws 17 protrudes radially outwards and has a radially external partial thread configured to engage with the female threaded terminal 2.

Each of the jaws 17 also has a radially internal relief 20 located at the engagement portion 18. This radially internal relief 20 has a partially tubular surface substantially parallel to the main axis "X-X" and an inclined connection surface with a central portion of the jaw 17 axially interposed between the engagement portion 18 and the guide portion 19. Each jaw 17 has an axially elongated shape, wherein a first axial end of the jaw has the engagement portion 18 and a second axial end of the jaw 17, opposite the first, has the guide portion 19. The terminal end 16 of the radially internal body 8 is configured to interact with the radially internal relief 20 of each jaw 17 placed at the engagement portion 18.

In particular, the terminal end 16 of the radially internal body 8 defines an operating portion of the auxiliary body engaged or engageable with the jaws 17. The auxiliary body is movable axially with respect to the main body 3 between a retracted position with respect to the engagement portions 18 of the jaws 17 corresponding to the release position of the jaws 17, in which the terminal end 16 of the radially internal body 8 is spaced from the radially internal relief 20, and an advanced position, in which the terminal end/operating portion 16 of the radially internal body 8 radially pushes the jaws into the second position of attachment to the terminal 2 acting against an inclined surface of said radially internal relief 20. Each of the jaws 17 is therefore radially movable between a first position closer to the main axis "X-X" and a second position more spaced from said main axis "X-X".

In the first position (position of detachment from the terminal: figures 1, 2 and 3B), the jaws 17 are joined together. In the second position (position of engagement to the terminal: figure 3A) the jaws 17 are spaced apart to engage the internal thread of the terminal 2.

A guide ring 21 coaxial with the main body 3 is mounted inside the radially external body 4 and lies in contact with the first end 5 of the main body 3. The guide ring 21 surrounds the radially internal body 8 and rests radially externally against the radially external body 4. The guide ring 21 has radial guides 22 engaged with the plurality of jaws 17 for guiding them radially during the movement between the first and second position. Each radial guide 22 can be a radial relief engaged in a radial groove of the guide portion 19 of the respective jaw 17 or a radial groove engaged with a radial relief of the guide portion 19 of the respective jaw 17.

An auxiliary guide ring 23 faces the guide ring 21 and the guide portion 19 of each jaw is axially locked between the guide ring 21 and the auxiliary guide ring 23. The auxiliary guide ring 23 comprises a radially outer portion 24 with a greater axial extent and a radially inner portion 25 with a smaller axial extent. The radially outer portion 24 rests against the guide ring 21 and the radially inner portion 25 remains spaced from the guide ring 21 to delimit an annular seat for the guide portion 19 of each jaw. In particular, the radially external portion 24 of the auxiliary guide ring 23 rests against a portion of the radial guides 22 configured as relieves.

In the first position (figures 1, 2 and 3B), a radially external surface of each guide portion 19 of the jaws 17 is radially spaced from a bottom surface of the annular seat (and is retained therein in the manner detailed below).

In the second position (figure 3A), said radially external surface of each guide portion 19 of the jaws 17 lies in contact with the bottom surface of the annular seat (and is retained therein in the manner detailed below).

The auxiliary body is movable between a first configuration corresponding to the first position of detachment from the terminal 2 and a second configuration corresponding to the second position of engagement to the terminal 2. In the first configuration, the auxiliary body is in a retracted position with respect to the engagement portions 18 of the jaws 17. In the second configuration, the auxiliary body is in an advanced position towards the engagement portions 18 of the jaws 17.

The jaws 17 can slide/translate in the radial direction but cannot move reciprocally in the circumferential direction. The guide ring 21 is free to rotate around the main axis "X-X" and the jaws 17 are free to rotate around the same main axis "X-X" jointly with the guide ring 21.

An obturator 26 substantially tubular and coaxial with the main body 3 is positioned partly inside the radially external body 4, protrudes axially from said radially external body 4 and surrounds the jaws 17. The obturator 26 has a head end provided with a gasket 27 intended to come into contact with the terminal 2 to ensure the hermetic seal against the terminal 2. The obturator 26 is movable axially with respect to the main body 3 between an advanced position (figure 3B) towards the engagement portions 18 of the jaws 17, in which radially and at least partially overcomes said engagement portions 18 of the jaws 17 to hold them in the first release position from the terminal 2, and a retracted position (figure 3A), in which it releases the engagement portions 18 and allows the jaws 17 to expand radially.

The joint action of the auxiliary body and the obturator 26 causes the radial movement of the jaws 17 both in opening and in closing while they are guided by the guide ring 21.

A valve body 28 integral with the main body 3 or part of the main body 3 is inserted in the passage duct C at the first end 6 so as to delimit a peripheral annular passage with respect to said valve body 28. The valve body has a sealing gasket 29 (O-ring) placed on its own radially external surface. The radially internal body 8 has its own rear end configured to radially insert itself between the valve body 28 and an internal wall of the passage duct C when the auxiliary body and therefore the radially internal body 8 are in the retracted position. In this position, the interaction of the radially internal body 8 with the sealing gasket 29 blocks the passage of the fluid.

Between the radially internal body 8 and the valve body 28, there is a first spring 30 which lies in the passage duct C, is of the helical type and coaxially surrounds the main axis "X-X". The first spring 30 lies against the valve body 28 and against an annular surface of the radially internal body 8 perpendicular to the main axis "X-X" and facing said annular surface of the main body 3. The first spring 30 is configured to push the auxiliary body, i.e. the radially internal body 8 and the ring nut 7, towards the engagement portions 18 of the jaws 17.

A second spring 31 is axially interposed between the main body 3 and the obturator 26 and is configured to push said obturator 26 away from the first end 6 of the main body 3 and towards the engagement portions 18 of the jaws 17. In particular, the second spring 31 rests against the auxiliary guide ring 23 and against an annular surface of the obturator 8. The second spring 31 shown is of the helical type, coaxial with the main axis "X-X". The second spring 31 is housed inside the obturator 28 surrounding the jaws 13.

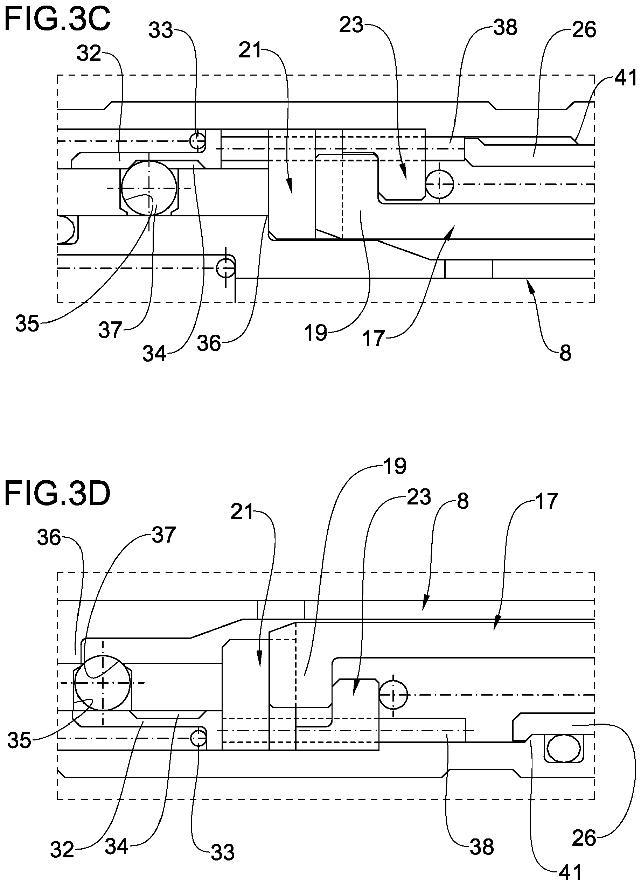

A tubular engagement/detachment slider 32 is placed radially between the main body 3 and the radially external body 4 and is axially located between the sealing gasket 11 located in the seat on the radially external surface of the main body 3 and the guide ring 21. The engagement/detachment slider 32 is housed in an annular chamber delimited by the main body 3, by the radially external body 4 and by the guide ring 21 and is axially movable with respect to the main body 3 and to the obturator. This annular chamber also houses a third spring 33 axially interposed between the main body 3 and the engagement/detachment slider 32. The third spring 33 is configured to push the engagement/detachment slider 32 towards the first end 5 of the main body 3 and against the guide ring 21. The engagement/detachment slider 32 has a radially internal annular groove 34 (figures 3C and 3D).

At the annular chamber which houses the engagement/detachment slider 32, the main body 3 has through holes 35 which radially cross a cylindrical wall thereof. Furthermore, the radially internal body 8 has a section reduction which defines an annular edge 36. Latching/releasing elements 37 defined by respective balls are slidably inserted in the through holes 11 of the main body 3. Said latching/releasing elements 37 are engaged/engageable with the engagement/detachment slider 32 or with the radially internal body 8, as will be illustrated later. The slider 32 and the latching/releasing elements 37 define latching/releasing devices which are configured to latch/release the axial movements of the obturator 26 and the auxiliary body with respect to the main body 3 by moving the ring nut 7.

The engagement/detachment slider 32 is operatively connected to the obturator 26 by means of three transmission rods 38 which extend through respective axial passages 39 obtained in the guide ring 21 and respective auxiliary axial passages 40 obtained in the auxiliary guide ring 23. The three rods 38 are parallel to the main axis "X-X", are arranged around the main axis "X-X" and are angularly equally spaced apart by 120°.

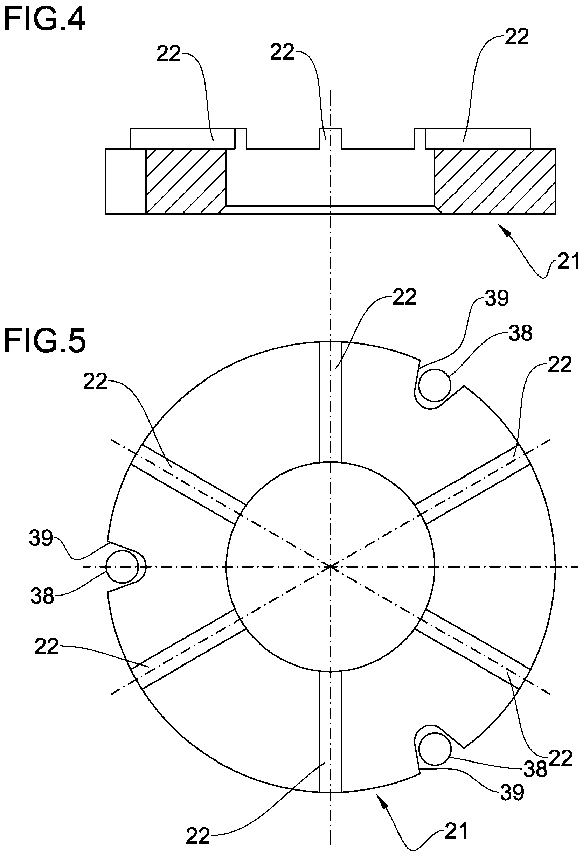

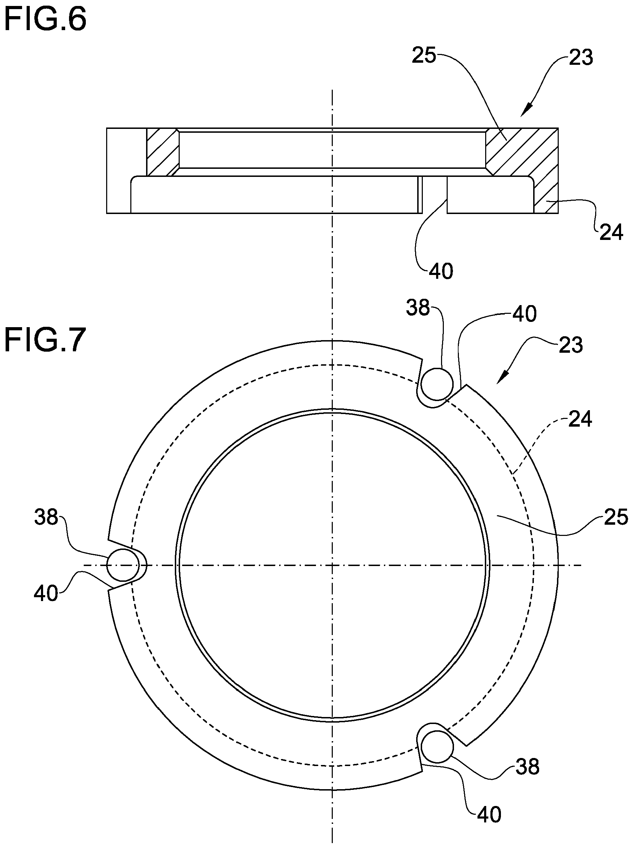

In the illustrated embodiment, each of the axial passages 39 of the guide ring 21 is a slot obtained on a peripheral edge of the guide ring 21 and obtained between two radial guides 22 and each of the auxiliary axial passages 40 is a slot obtained on a peripheral edge of the auxiliary guide ring 23 (figures 5 and 7). In other embodiments, these axial passages can be through holes.

In the first configuration (figures 3B and 3D), the balls 37 protrude radially inward from the respective through holes 35 and its protruding part lies against the chamfered annular edge 36 preventing the axial movement of the radially internal body 8.

In the second configuration (figures 3A and 3C), the balls 37 are completely retracted in the through holes 35 and the first spring 30 axially pushes the radially internal body 8 against the guide ring 21. Furthermore, the balls 37 protrude into the radially internal annular groove 34 of the engagement/detachment slider 32, locking the axial movement thereof in contrast to the thrust exerted by the third spring 33.

In the release position from the terminal 2, illustrated in figures 3B and 3D, the quick coupling 1 is in the first configuration. In this first configuration, the latching/releasing elements 37 (balls) lie outside the annular groove 34 of the engagement/detachment slider 32 and lie against the chamfered annular edge 36 of the radially internal body 8. The engagement/detachment slider 32 is in contact with the guide ring 21, pushed by the third spring 33. The second spring 31 pushes the obturator 26 towards the engagement portions 18 of the jaws 17 and a stop edge 41 obtained in the radially external body 4 holds the obturator 26 in said radially external body 4, counteracting the action of the second spring 31. In this first configuration, a radially internal surface of the obturator 26 close to the head end is placed at the engagement portions 18 of the jaws 17 and in contact thereof. This radially internal surface of the obturator 26 prevents the jaws 13 from opening radially. The transmission rods 38 are free to move axially between the engagement/detachment slider 32 and the obturator 26.

To engage the terminal 2 to the quick coupling 1, the operator grasps the radially external body 4 and inserts the engagement portions 18 of the jaws 17 in the female terminal 2. The female terminal 2 rests against the head end of the obturator 26 guided and centered by the same jaws 17.

The terminal 2 pushes the obturator 26 axially towards the second end 6 opposed by the second spring 31 which compresses partially.

This movement brings a rear end of the obturator 26 against the transmission rods 38 which in turn push the engagement/detachment slider 32. The obturator 26 rests against the transmission rods 38 and the rods 38 push the engagement/detachment slider 32 back towards the second end 6, opposed by the second and third spring 31, 33 which compress partially, until the annular groove 34 of the engagement/detachment slider 32 arrives at the latching/releasing balls 37.

At this point, the latching/releasing balls 37 move radially outwards and enter the annular groove 34, freeing the radially internal body 8 and the ring nut 7 which can slide forward towards the first end 5. The ring nut 7 rests axially against the radially external body 4.

The withdrawal of the obturator 26 also frees the jaws 17 which can move radially outwards.

The terminal end 16 of the radially internal body 8 radially pushes the jaws 17 away from the main axis "X-X" and said jaws 17 open radially engaging their thread portion with the internal thread of the female terminal 2 (figure 3A).

At this point, the ring nut 7 can be manually rotated with respect to the main body 3 so as to position the pins 12 in the section of the through slot 13 orthogonal to said main axis "X-X" and prevent accidental release of the coupling 1. In this second engagement position, the transmission rods 38 are axially locked between the engagement/detachment slider 32 and the obturator 26.

To release the quick coupling 1 from the terminal 2, the operator first rotates the ring nut 7 in order to release the pins 12 from the section of the through slot 13 orthogonal to said main axis "X-X" and then pulls it away from the terminal 2 in contrast to the first spring 30 preferably acting on the maneuvering lug 14 and on the auxiliary maneuvering lug 15.

The ring nut 7 and the radially internal body 8 slide axially on the main body 3 towards the second end 6, causing the first spring 30 to compress, until the jaws 17 are free and to bring the annular edge 36 of the radially internal body 8 at the latching/releasing balls 37.

At this point, the jaws 17 are free to close radially, allowing their extraction from the female terminal 2 and at the same time the latching/releasing balls 37 move radially inwards and against the annular edge 36, freeing the engagement/detachment slider 32. The second and third spring 31, 33 therefore push the engagement/detachment slider 32 and the obturator 26 again towards the first configuration (figures 3B and 3C).

In a variant not illustrated, the quick coupling is identical to the one illustrated herein but in that the jaws 17 of the quick coupling 1 are not threaded as they engage with a female terminal 2 that is not threaded, but only shaped, not shown.

## Claims

1. Quick coupling for threaded or shaped terminals, comprising:
a substantially tubular main body (3) internally delimiting a passage duct (C) for a fluid, wherein said main body (3) has a first end (5) and a second end (6) opposite the first end (5) and configured to connect with a circuit;
a plurality of jaws (17) arranged around a main axis (X-X) of the passage duct (C), wherein the jaws (17) are operatively coupled to the main body (3) at the first end (5), wherein each of said jaws (17) is movable radially with respect to the main body (3) between a first release position from a terminal (2) and a second position coupled to the terminal (2);
a guide ring (21) coaxial with the main body (3) and having radial guides (22) engaged with the plurality of jaws (17) for guiding them radially during the movement between the first and second position;
an obturator (26) substantially tubular and coaxial with the main body (3), wherein the obturator (26) is movable axially with respect to the main body (3) between an advanced position towards engagement portions (18) of the jaws (17), in which radially and at least partially overcomes the engagement portions (18) of the jaws (17) to hold them in the first release position from the terminal (2), and a retracted position, in which it releases the engagement portions (18) and allows the radial movement of the jaws (17);
an auxiliary body sliding axially with respect to the main body (3), wherein the auxiliary body comprises a ring nut (7) radially external to the main body (3) and movable axially on the main body (3) and a radially internal body (8) with respect to the main body (3) and integrally connected to the ring nut (7), wherein an operative portion of the radially internal body (8) is engaged or engageable with the jaws (17); wherein the auxiliary body is movable axially with respect to the main body (3) between a rearward position with respect to the engagement portions (18) of the jaws (17) corresponding to the release position of the jaws (17), and an advanced position, in which radially pushes the jaws (17) into the second coupled position to the terminal (2);
an engagement/detachment slider (32) coaxial with the main body (3) and movable axially with respect to the main body (3) and with respect to the obturator (26);
latching/releasing elements (37) movable in through holes (35) formed in the main body (3), wherein said latching/releasing elements (37) are engaged/engageable with the engagement/detachment slider (32) and with the radially internal body (8);
**characterized in that** it comprises at least a motion transmission rod (38) axially interposed between the engagement/detachment slider (32) and the obturator (26) to transmit an axial movement of the obturator (26) to the engagement/detachment slider (32).

2. Quick coupling according to claim 1, wherein said at least one rod (38) comprises a plurality of rods (38) arranged around the main axis (X-X) and preferably angularly spaced from one another.

3. Quick coupling according to claim 1 or 2, wherein the guide ring (21) has at least one axial passage (39) for said at least one transmission rod (38), preferably a plurality of axial passages (39), each for a respective transmission rod (38).

4. Quick coupling according to claim 3, wherein said at least one axial passage (39) is a hole or a slot formed on a peripheral edge of the guide ring (21).

5. Quick coupling according to one of the preceding claims, comprising an auxiliary guide ring (23) facing the guide ring (21), wherein a guide portion (19) of each jaw (17) is axially locked between the guide ring (21) and the auxiliary guide ring (23).

6. Quick coupling according to claim 5, wherein the auxiliary guide ring (23) has at least one auxiliary axial passage (40) for said at least one transmission rod (38), preferably a plurality of auxiliary axial passages (40), each for a respective transmission rod (38).

7. Quick coupling according to claim 6, wherein said at least one auxiliary axial passage (40) is a hole or a slot formed on a peripheral edge of the auxiliary guide ring (23).

8. Quick coupling according to claim 6 or 7, wherein the auxiliary guide ring (23) comprises a radially outer portion (24) with a greater axial extension and a radially inner portion (25) with a smaller axial extension, wherein the radially outer portion (24) rests against the guide ring (21) and the radially inner portion (25) remains spaced from the guide ring (21) to delimit a seat for the guide portion (19) of each jaw (17).

9. Quick coupling according to one of the preceding claims, wherein the main body (3) has at least one through slot (13) and wherein the ring nut (7) is connected to the radially internal body (8) by at least one pin (12) integral with the ring nut (7) and with the radially internal body (8) and passing through said through slot (13); wherein said through slot (13) or at least one of the through slots (13) has is L-shaped and wherein said at least one pin (12) or at least one of said pins (12) protrudes from the through L-shaped slot (13) to define a maneuvering lug (14); wherein the coupling (1) further comprises an auxiliary maneuvering lug (15) integral with the main body (3) and radially protruding from said main body (3).

10. Quick coupling according to the previous claim, wherein a first sealing gasket (9) and a second sealing gasket (10) are radially interposed between the radially internal body (8) and the main body (3) and are axially placed respectively upstream and downstream of said at least one through slot (13).

## Patentansprüche

1. Schnellkopplung für mit einem Gewinde versehene oder geformte Anschlüsse, umfassend:
einen im Wesentlichen rohrförmigen Hauptkörper (3), welcher einen Durchgangskanal (C) für ein Fluid innerhalb begrenzt, wobei der Hauptkörper (3) ein erstes Ende (5) und ein dem ersten Ende (5) entgegengesetztes zweites Ende (6) aufweist und dazu eingerichtet ist, mit einem Kreislauf verbunden zu sein;
eine Mehrzahl von Backen (17), welche um eine Hauptachse (X-X) des Durchgangskanals (C) herum angeordnet sind, wobei die Backen (17) an dem ersten Ende (5) betriebsmäßig mit dem Hauptkörper (3) gekoppelt sind, wobei jede der Backen (17) in Bezug auf den Hauptkörper (3) radial beweglich ist zwischen einer ersten Freigabeposition von einem Anschluss (2) und einer zweiten Position, mit dem Anschluss (2) gekoppelt;
einen Führungsring (21), welcher koaxial zu dem Hauptkörper (3) ist und radiale Führungen (22) aufweist, welche mit der Mehrzahl von Backen (17) in Eingriff gebracht sind, um sie während der Bewegung zwischen der ersten und der zweiten Position radial zu führen;
einen Obturator (26), welcher im Wesentlichen rohrförmig ist und koaxial zu dem Hauptkörper (3) ist, wobei der Obturator (26) in Bezug auf den Hauptkörper (3) axial beweglich ist zwischen einer vorgeschobenen Position in Richtung von Eingriffsabschnitten (18) der Backen (17), in welcher er die Eingriffsabschnitte (18) der Backen (17) radial und wenigstens teilweise überwindet, um sie in der ersten Freigabeposition von dem Anschluss (2) zu halten, und einer zurückgezogenen Position, in welcher er die Eingriffsabschnitte (18) freigibt und die radiale Bewegung der Backen (17) erlaubt;
einen Hilfskörper, welcher sich in Bezug auf den Hauptkörper (3) axial verschiebt, wobei der Hilfskörper eine Ringmutter (7) umfasst, welche sich radial außerhalb des Hauptkörpers (3) befindet und in Bezug auf den Hauptkörper (3) an dem Hauptkörper (3) und einem radial inneren Körper (8) axial beweglich ist und integral mit der Ringmutter (7) gekoppelt ist, wobei ein operativer Abschnitt des radial inneren Körpers (8) mit den Backen (17) in Eingriff gebracht ist oder in Eingriff bringbar ist; wobei der Hilfskörper in Bezug auf den Hauptkörper (3) axial beweglich ist zwischen einer in Bezug auf die Eingriffsabschnitte (18) der Backen (17) hinteren Position, welche der Freigabeposition der Backen (17) entspricht, und einer vorgeschobenen Position, in welcher er die Backen (17) radial in die zweite gekoppelte Position an den Anschluss (2) drückt;
einen Eingriffs-/Trennschieber (32), welcher koaxial zu dem Hauptkörper (3) ist und in Bezug auf den Hauptkörper (3) und in Bezug auf den Obturator (26) axial beweglich ist;
Verriegelungs-/Freigabeelemente (37), welche in Durchgangslöchern (35) beweglich sind, die in dem Hauptkörper (3) gebildet sind, wobei die Verriegelungs-/Freigabeelemente (37) mit dem Eingriffs-/Trennschieber (32) und mit dem radial inneren Körper (8) in Eingriff gebracht sind / in Eingriff bringbar sind;
**dadurch gekennzeichnet, dass** sie wenigstens eine Bewegungsübertragungsstange (38) umfasst, welche axial zwischen dem Eingriffs-/Trennschieber (32) und dem Obturator (26) eingefügt ist, um eine axiale Bewegung des Obturators (26) auf den Eingriffs-/Trennschieber (32) zu übertragen.

2. Schnellkopplung nach Anspruch 1, wobei die wenigstens eine Stange (38) eine Mehrzahl von Stangen (38) umfasst, welche um die Hauptachse (X-X) herum angeordnet sind und vorzugsweise winkelmäßig voneinander beabstandet sind.

3. Schnellkopplung nach Anspruch 1 oder 2, wobei der Führungsring (21) wenigstens einen axialen Durchgang (39) für die wenigstens eine Übertragungsstange (38) aufweist, vorzugsweise eine Mehrzahl axialer Durchgänge (39), jeder für eine jeweilige Übertragungsstange (38).

4. Schnellkopplung nach Anspruch 3, wobei der wenigstens eine axiale Durchgang (39) ein Loch oder ein Schlitz ist, welches/welcher an einem Umfangsrand des Führungsrings (21) gebildet ist.

5. Schnellkopplung nach einem der vorhergehenden Ansprüche, umfassend einen Hilfsführungsring (23), welcher dem Führungsring (21) zugewandt ist, wobei ein Führungsabschnitt (19) jeder Backe (17) zwischen dem Führungsring (21) und dem Hilfsführungsring (23) axial eingeschlossen ist.

6. Schnellkopplung nach Anspruch 5, wobei der Hilfsführungsring (23) wenigstens einen axialen Hilfsdurchgang (40) für die wenigstens eine Übertragungsstange (38) aufweist, vorzugsweise eine Mehrzahl axialer Hilfsdurchgänge (40), jeder für eine jeweilige Übertragungsstange (38).

7. Schnellkopplung nach Anspruch 6, wobei der wenigstens eine axiale Hilfsdurchgang (40) ein Loch oder ein Schlitz ist, welches/welcher an einem Umfangsrand des Hilfsführungsrings (23) gebildet ist.

8. Schnellkopplung nach Anspruch 6 oder 7, wobei der Hilfsführungsring (23) einen radial äußeren Abschnitt (24) mit einer größeren axialen Erstreckung und einen radial inneren Abschnitt (25) mit einer kleineren axialen Erstreckung umfasst, wobei der radial äußere Abschnitt (24) an dem Führungsring (21) anliegt und der radial innere Abschnitt (25) von dem Führungsring (21) beabstandet bleibt, um eine Aufnahme für den Führungsabschnitt (19) jeder Backe (17) zu begrenzen.

9. Schnellkopplung nach einem der vorhergehenden Ansprüche, wobei der Hauptkörper (3) wenigstens einen Durchgangsschlitz (13) aufweist und wobei die Ringmutter (7) mit dem radial inneren Körper (8) durch wenigstens einen Stift (12) verbunden ist, welcher integral mit der Ringmutter (7) und mit dem radial inneren Körper (8) ist und durch den Durchgangsschlitz (13) verläuft; wobei der Durchgangsschlitz (13) oder wenigstens einer der Durchgangsschlitze (13) L-förmig ist und wobei der wenigstens eine Stift (12) oder wenigstens einer der Stifte (12) von dem L-förmigen Durchgangsschlitz (13) vorsteht, um eine Manövriernase (14) zu definieren; wobei die Kopplung (1) ferner eine Hilfsmanövriernase (15) umfasst, welche integral mit dem Hauptkörper (3) ist und radial von dem Hauptkörper (3) vorsteht.

10. Schnellkopplung nach dem vorhergehenden Anspruch, wobei eine erste Dichtung (9) und eine zweite Dichtung (10) radial zwischen dem radial inneren Körper (8) und dem Hauptkörper (3) eingefügt sind und axial dem wenigstens einen Durchgangsschlitz (13) vorgelagert bzw. nachgelagert positioniert sind.

## Revendications

1. Raccord rapide pour embouts filetés ou profilés, comprenant :
un corps principal (3) sensiblement tubulaire délimitant au plan interne un conduit de passage (C) pour un fluide, ledit corps principal (3) ayant une première extrémité (5) et une seconde extrémité (6) opposée à la première extrémité (5) et conçues pour se raccorder à un circuit ;
une pluralité de mâchoires (17) disposées autour d'un axe principal (X-X) du conduit de passage (C), les mâchoires (17) étant fonctionnellement accouplées au corps principal (3) au niveau de la première extrémité (5), chacune desdites mâchoires (17) étant mobile radialement par rapport au corps principal (3) entre une première position de libération d'un embout (2) et une seconde position accouplée à l'embout (2) ;
une bague de guidage (21) coaxiale avec le corps principal (3) et ayant des guides radiaux (22) engagés avec la pluralité des mâchoires (17) pour les guider radialement durant le mouvement entre la première et la seconde position ;
un obturateur (26) sensiblement tubulaire et coaxial par rapport au corps principal (3), l'obturateur (26) étant mobile axialement par rapport au corps principal (3) entre une position avancée vers des portions d'engagement (18) des mâchoires (17), dans lesquelles il surmonte radialement et au moins partiellement les portions d'engagement (18) des mâchoires (17) pour les maintenir dans la première position de libération de l'embout (2), et une position rétractée, dans laquelle il libère les portions d'engagement (18) et permet le mouvement radial des mâchoires (17) ;
un corps auxiliaire coulissant axialement par rapport au corps principal (3), le corps auxiliaire comprenant un écrou de blocage (7) radialement externe au corps principal (3) et mobile axialement sur le corps principal (3) et un corps radialement interne (8) par rapport au corps principal (3) et intégralement raccordé à l'écrou de blocage (7), une portion fonctionnelle du corps radialement interne (8) étant engagée ou pouvant être engagée avec les mâchoires (17) ; le corps auxiliaire étant mobile axialement par rapport au corps principal (3) entre une position vers l'arrière par rapport aux portions d'engagement (18) des mâchoires (17) correspondant à la position de libération des mâchoires (17), et une position avancée, dans laquelle elle pousse radialement les mâchoires (17) dans la seconde position accouplée à l'embout (2) ;
un coulisseau d'engagement/détachement (32) coaxial avec le corps principal (3) et axialement mobile par rapport au corps principal (3) et par rapport à l'obturateur (26) ;
des éléments de verrouillage/libération (37) mobiles dans des trous traversants (35) formés dans le corps principal (3), lesdits éléments de verrouillage/libération (37) étant engagés/pouvant être engagés avec le coulisseau d'engagement/détachement (32) et avec le corps radialement interne (8) ; **caractérisé en ce qu'**il comprend au moins une tige de transmission de mouvement (38) axialement interposée entre le coulisseau d'engagement/détachement (32) et l'obturateur (26) pour transmettre un mouvement axial de l'obturateur (26) au coulisseau d'engagement/détachement (32).

2. Raccord rapide selon la revendication 1, ladite au moins une tige (38) comprenant une pluralité de tiges (38) disposées autour de l'axe principal (X-X) et espacées préférablement de manière angulaire l'une par rapport à l'autre.

3. Raccord rapide selon la revendication 1 ou 2, la bague de guidage (21) ayant au moins un passage axial (39) pour ladite au moins une tige de transmission (38), préférablement une pluralité de passages axiaux (39), chacun pour une tige de transmission (38) respective.

4. Raccord rapide selon la revendication 3, ledit au moins un passage axial (39) étant un trou ou une fente formé·e sur un bord périphérique de la bague de guidage (21).

5. Raccord rapide selon l'une des revendications précédentes, comprenant une bague de guidage auxiliaire (23) faisant face à la bague de guidage (21), une portion de guidage (19) de chaque mâchoire (17) étant axialement verrouillée entre la bague de guidage (21) et la bague de guidage auxiliaire (23).

6. Raccord rapide selon la revendication 5, la bague de guidage auxiliaire (23) ayant au moins un passage axial auxiliaire (40) pour ladite au moins une tige de transmission (38), préférablement une pluralité de passages axiaux auxiliaires (40), chacun pour une tige de transmission (38) respective.

7. Raccord rapide selon la revendication 6, ledit au moins un passage axial auxiliaire (40) étant un trou ou une fente formé·e sur un bord périphérique de la bague de guidage auxiliaire (23).

8. Raccord rapide selon la revendication 6 ou 7, la bague de guidage auxiliaire (23) comprenant une portion radialement externe (24) ayant une extension axiale supérieure et une portion radialement interne (25) ayant une extension axiale inférieure, la portion radialement externe (24) reposant contre la bague de guidage (21) et la portion radialement interne (25) demeurant espacée de la bague de guidage (21) pour délimiter un siège pour la portion de guidage (19) de chaque mâchoire (17).

9. Raccord rapide selon l'une des revendications précédentes, le corps principal (3) ayant au moins une fente traversante (13) et l'écrou de blocage (7) étant raccordé au corps radialement interne (8) par au moins une goupille (12) solidaire de l'écrou de blocage (7) et avec le corps radialement interne (8) et passant à travers ladite fente traversante (13) ; ladite fente traversante (13) ou au moins l'une des fentes traversantes (13) ayant une forme de L et ladite au moins une goupille (12) ou au moins l'une desdites goupilles (12) faisant saillie depuis la fente traversante (13) en forme de L pour définir une patte de manoeuvre (14) ; l'accouplement (1) comprenant en outre une patte de manoeuvre auxiliaire (15) solidaire du corps principal (3) et faisant radialement saillie depuis ledit corps principal (3).

10. Raccord rapide selon la revendication précédente, un premier joint d'étanchéité (9) et un second joint d'étanchéité (10) étant radialement interposés entre le corps radialement interne (8) et le corps principal (3) et étant axialement placés respectivement en amont et en aval de ladite au moins une fente traversante (13).
